Europäisches Patentamt

European Patent Office

Office européen des brevets

(19)

(11) Publication number: **0 266 917**
**A1**

## (12) EUROPEAN PATENT APPLICATION

(21) Application number: **87308940.3**

(22) Date of filing: **08.10.87**

(51) Int. Cl.⁴ **G01L 1/22 , G01L 5/13**

(30) Priority: **08.10.86 GB 8624190**

(43) Date of publication of application:
**11.05.88 Bulletin 88/19**

(84) Designated Contracting States:
**AT BE CH DE ES FR GB GR IT LI LU NL SE**

(71) Applicant: **Wahlgren, Bjorn Elve Gullmar**
**Bergkullevägen 287**
**S-46166 Trollhattan(SE)**

(72) Inventor: **Wahlgren, Bjorn Elve Gullmar**
**Bergkullevägen 287**
**S-46166 Trollhattan(SE)**

(74) Representative: **Adkins, Michael et al**
**Withers & Rogers 4 Dyer's Buildings**
**Holborn London, EC1N 2JT(GB)**

(54) **Strain gauged transducers.**

(57) A strain gauged transducer is adapted to measure or monitor changes of strain between two spaced positions. The transducer comprises a base member 26 mounting at least one strain gauge 28. In one embodiment the base member 26 is in the form of a section through the centre of a sphere and four strain gauges 28 are mounted in a mutually perpendicular arrangement on each flat surface 30. The transducer monitors or measures changes in strain between two spaced apart surface portions 23, 34 of the base member 26. The transducer may be located with the surface portions 23, 34 in an interference fit between two bodies or similarly within a suitable hole 20, 22 provided in a body. Alternatively the transducer may be located in this manner in a barrel nozzle 40 which may then be inserted into a suitable hole 44 in a body.

Fig.4.

EP 0 266 917 A1

## STRAIN GAUGED TRANSDUCERS

This invention relates to a strain gauged transducer.

The strain gauge has many technical applications, particularly in engineering, for instance to check regions of high strain on structures; when the strains are known (deformation in a given direction divided by the gauge length in the same direction), the properties of the material or body under test may be used to compute the local stresses (forces per unit of area). In parts of irregular shape, which may be subjected to complicated loading systems, the strain may vary from point to point, and a short gauge length is required in conjunction with accurate location of the gauge.

One type of strain gauge widely used is the bonded electric resistance strain gauge, consisting of a length of fine wire formed into a grid and cemented between two pieces of thin paper, commonly the size of a postage stamp, often with a gauge length of 1mm or less. The gauge is connected to the part to be tested. More recently integral "thin-film" gauges which are etched into the part to be tested have been developed. As is well known, changes in the stress on the conductor cause its length and cross-sectional area to vary, to change the electrical resistance which is then measurable by suitable electrical circuitry. Such a gauge, using electric phenomenon, can be applied as a transducer to determine magnitudes of forces, torques, pressures, accelerations and similar physical quantities i.e. both static and dynamic quantities.

Often it is desirable to measure strain at a chosen depth below the surface of a workpiece. Thus European Patent Application 129 331 disclosed a strain gauged transducer to measure strain at the neutral axis of a draft bar. The transducer comprised a hollow cylindrical plug, force-fitted at its distal end with a disc-like diaphragm on which strain gauges are mounted, the mounting being on an inside face with connections extending up inside the plug into encapsulated electronic circuitry at the proximal end. The transducer is an interference fit in a bore in the workpiece. However, not only is the transducer difficult to assemble, but if it is to give reliable readings for the various strains to which the workpiece may be subject - compression, extension, shear, torque, bending, not only must the transducer be a good fit in the bore, the disc must be a tight interference fit in the plug - and with a multitude of contact points each with greater or lesser contact loading depending on the local tolerances, this has proved difficult if not impossible to achieve under commercial conditions. Often, therefore the transducer has been force-fitted into the bore with deformation of the disc affecting initial zero-ing, and making subsequent removal impracticable.

My arrangement is based on the contrary philosophy i.e. I do not seek to plug on the bore, nor do I seek to measure all the strains from contact points all around the disc periphery. Rather I measure the strain between two points, preferably both on the highest strain line, and with a firm fit between the transducer and the workpiece. I am able to use a disc of resilient material, operating for normal and shock loading below its yield point, so that it does not take a permanent set when being fitted, resulting in a modified output whose value cannot accurately be predicted in advance.

According to one aspect of the invention there is provided a strain gauged transducer comprising a base member and at least one strain gauge, the base member having a pair of spaced apart surface portions characterised in that the or each strain gauge is arranged to measure or monitor changes of strain between the said surface portions.

The base member may be of any shape and may e.g. be in the form of a disc and preferably is in the form of a section through the centre of a sphere.

The transducer may comprise a group of four strain gauges. Where a plurality of strain gauges is provided these may be arranged substantially in the same plane. Also, where a plurality of strain gauges is provided, these may be at right angles to each other. Preferably a transducer will comprise a group of four strain gauges arranged substantially in the same plane and at right angles to each other.

Where the base member is a disc it may be provided with strain gauges in any suitable array, fitted or embedded in one or both faces. Preferably, however, it includes a group of four strain gauges arranged as described in the previous paragraph on one, or preferably both faces.

According to another aspect of the invention there is provided a method of measuring or monitoring the change of strain between two spaced positions comprising locating a strain gauged transducer according to the aspect of the invention which has been described just herein and including any of the features subsequently described in relation to this aspect such that the transducer extends between means defining the two positions with each said surface portion in an interference fit with said means at said respective positions, and monitoring the or each strain gauge.

Changes of strain are thus measured or monitored between two spaced positions only. These positions may be difined by the internal surface of a bore in a workpiece or other member, or may be defined by two separate workpieces, or by a workpiece and a fixed member. Such a bore may be of any shape, e.g. oval, square, rectangular, circular or of irregular shape. The member may be positioned in such a bore at any angle and in the case of a member in the shape of a flat disc it may be positioned with its faces extending in a plane parallel·to the bore axis.

According to a further aspect of the invention there is provided apparatus for measuring or monitoring the change of strain in a workpiece or other member comprising a hollow elongate body into which a strain gauged transducer is located, the body in· use being inserted into a hole in the workpiece or other member such that the region of the body adjacent the strain gauged transducer is in operative engagement with the hole, characterised in that the transducer is a transducer according to the aspect of the invention described first herein and including any of the features subsequently described in relation to this aspect and is located such that each of said surface portions is in engagement with an inner surface of the body.

Such apparatus may be used e.g. in dynamic conditions where otherwise the fit of the transducer between the means defining the two positions might not be sufficient to maintain the angular orientation of the transducer.

Preferably the inner surface of the body is of circular cross-section.

The body may have a screw thread on its outer surface and in use be received by a complementary screw thread provided in the hole in the workpiece or other member. In such a case the body and the hole may be mutually tapered. Thus, under static or dynamic conditions, if the tightness of the fit needs to be adjustable to vary the measurement range of the transducer, the body can be screwed into or out of the bore to increase or decrease respectively the interference loading on the body and hence on the base member.

An advantage of this apparartus is that I can adjust the angular orientation of my transducer in the hole until I achieve maximum indicated output i.e. the maximum strain line.

Furthermore, if e.g. the zero loading output is too small, I can withdraw the transducer to a position nearer the workpiece surface e.g. to a position of increased bending strain. By selecting the line of highest strain, at a high strain location, I am less dependent on amplification of the transducer signal and so avoid or reduce the amplification errors in the final output reading. Additionally, the transducer can be tuned to a particular application; alternatively the transducer can be calibrated accurately, by being positoned in a test bore to which a known loading is applied.

the body may be formed of stainless steel. The base member is preferably formed of the same material as the workpiece or other member.

The strain gauge may be of any suitable type and preferably is of the type responsive to changes in electrical resistance.

According to a further aspect of the invention there is provided a vehicle axle which includes a strain gauged transducer according to the aspect of the invention which has been described first herein and including any of the features subsequently described in relation to this aspect, the transducer being arranged to measure or monitor changes of strain in the axle.

According to a further aspect of the invention there is provided a chassis member in a wheeled vehicle which includes a strain gauged transducer according to the aspect of the invention which has been described first herein and including any of the features subsequently described in relation to this aspect, the transducer being arranged to measure or monitor changes of strain in the chassis member resulting from load transmission to the chassis member.

An embodiment of the invention will now be described by way of example and with reference to the accompanying drawings, in which:-

Fig. 1 is a sectional view of a workpiece, subjected to an offset force P to provide a torque load, and having two bores, each with a strain gauged transducer according to the invention.

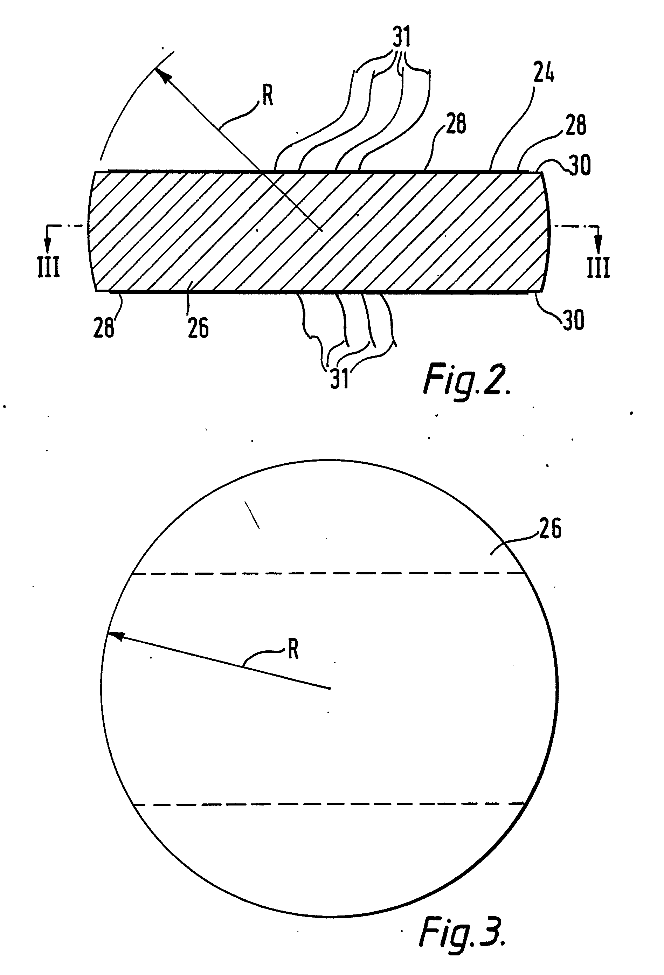

Fig. 2 is an enlarged sectional view of a strain gauged transducer.

Fig. 3 is a section on the line III - III of Fig. 2.

Fig. 4 is a cross-sectional view of transducer fitted in a threaded nozzle in a tapped hole in a workpiece.

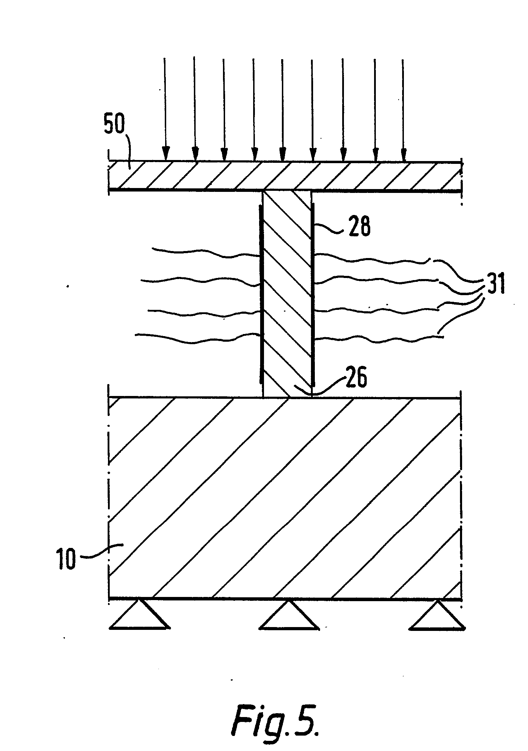

Fig. 5 is an elevational view of a transducer fitted between a rigid workpiece and a pressure diaphragm.

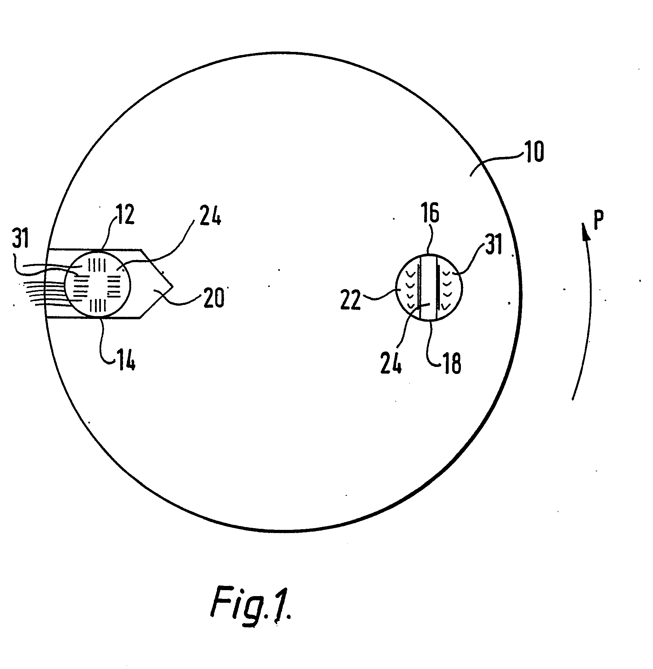

In the arrangement of Fig.1, the workpiece is a bar, subject to a force P tending to rotate the bar about its axis. The internal strains in the workpiece 10 between two chosen opposed positions 12, 14 and 16, 18 of bores 20, 22 are recorded by the transducer discs 24. Each transducer disc comprises a base member 26, and strain gauges 28, which in these embodiments are affixed to each face 30 of the discs 24; but which in another embodiment could be formed as a "thin film" array in the surface of faces 30, in known fashion.

In use the faces 30 extend parallel to the axis of bores 20, 22 so that the connections 31 from the strain gauges 28 on both faces 30 of the discs 24 can be led out of the bores 20, 22 to the control circuitry (not shown).

The base member 26 has the shape of a section of a sphere of radius R; with protruding crowns 23, 34, which in use are an interference fit between the two chosen opposed positions 12, 14 or 16, 18 in workpiece 10. However, in another embodiment the crowns can be formed as protrusions or projections on a base member of another selected shape e.g. columnar.

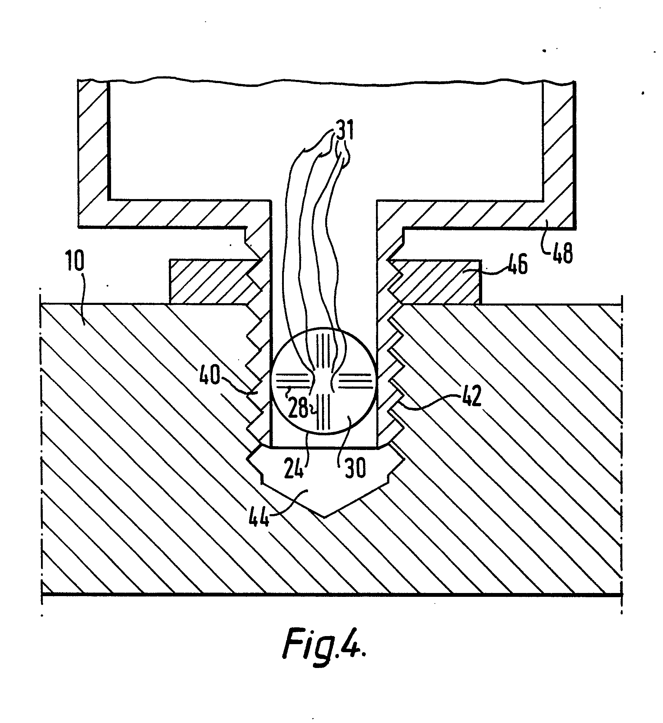

As seen in Fig. 4, the transducer disc 24 is located as an interference fit in a threaded barrel nozzle 40. In this embodiment only one face 30 of the base member 26 carries strain gauges 28. The barrel nozzle 40 is externally-threaded at 42 and is positoned in a tapped hole 44 in the workpeice. Locknut 46 secures the barrel nozzle 40 and thus the transducer disc 24 in the correct angular position. In an alternative embodiment, the barrel nozzle 40 and tapped hole 44 can be mutually tapered, so that the degree of interference can be chosen to suit the range of strain values to be measured, by screwing or unscrewing the barrel nozzle by successive half or full turns. The connections 31 extend up inside the barrel nozzle 40 to circuitry (not shown) encapsulated in housing 48. In the embodiment of Fig. 4, the base member 26 is of the same material as the workpiece 10, usually hard metal, whereas the barrel nozzle 40 and housing 48 are of stainless steel.

In an alternative use for transducer disc 24, it can be positioned externally of a workpiece e.g. to measure pressure, as between the workpiece 10 and a pressure diaphragm 50.

In the disclosed embodiment in which the base member 26 is a section through a sphere, the base member can be very accurately generated from a precision ball, and so be suitable for insertion with an interference fit to any depth, at any angle, in any suitable sized hole or opening in a workpiece or structural member (or between workpieces or structural members) in both static and dynamic locations. All strains can be measured, if necessary by a suitable combination of transducer discs 24, i.e. tension, compression, bending, shear and torque. The two point pick-up parallel to the strain to be measured permits a higher accuracy to be achieved than with earlier arrangements seeking to provide a uniform interference fit over the disc peripheral edges. Thus the transducer disc 24 of the invention can selectively measure strains between two points, largely or wholly independently of strains in other directions or between other points.

The transducer disc construction I have proposed largely overcomes the long term problems of electrical creep, transducer mechanical distortion, and location instability e.g. movement of the transducer due to offset strains if not one the neutral axis. Its design will allow a margin for shock and overloads.

The transducer shown in Fig. 4 can quickly and easily be replaced, e.g. to permit different sensors with differing sensitivities to be used, or for re-calibration e.g. after a shock load. The circuitry in housing 48 can be releasably coupled to connections 31, so that the housing 48 can be replaced if required e.g. during routine maintenance.

The transducer as described in Fig. 4 is likely to introduce an optimal solution to the commercial field of weighing and load sensing equipment. As described, the transducer can be positioned with the transducer disc in the correct angular position, with the appropriate output and sensitivity determined already at fitting and with re-calibration before the system is commissioned, (which also satisfied the field service requirements).

My arrangement is likely to find particular application in vehicle weighing e.g. of individual axles. Not only have the Authorities long been concerned with individual axle weight as the correct indicator of damage to road surfaces, but vehicle operators also require an immediate indication of axle and/or total weight e.g. to avoid the vehicle having to return from a weighbridge to offload part of a difficult cargo e.g. "sticking" bitumen, or alternatively to ensure correct weight delivery to customers. This latter problem is of major concern e.g. to suppliers of liquid fuel or other temperature-dependent materials, normally off loaded at various locations and checked only by a flow-meter of dipstick. Thus, whilst I foresee that the transducer output could be visually recorded in the driver's cab, I also propose that a locked record, similar to that for tachograph, be maintained for subsequent checking of loads and axle loading by the customers, operators and the Authorities.

Since my arrangement does not need the transducer and/or disc to be a tight interference fit, the sensor can be positioned by unskilled staff, requiring only that the hole be bored or tapped accurately e.g. in the vehicle axle, using the standard equipment; and thereafter that the transducer zero etc. be "set" using the (sealed) calibration equipment provided, with the relative angular position being varied e.g. until the maximum strain line angle is found, at a location or depth in the bore giving e.g. full scale output. Because of the balanced strain forces on the disc when in a bore, the difficulty of seeking a neutral axis is avoided.

I foresee further applications in vehicles for my invention. In trucks there is a well-recognised problem of weight-transfer during braking, so that the required braking ratio between the front and rear axles varies considerably during braking and with the load. One attempted solution to this problem has been to vary the braking ratio by means of a valve responsive to a varied cam angle. This method and apparatus is not particularly accurate and I now propose that the required brake ratio be continually set in dependence upon strains in the respective axles measured by a suitable number and disposition of my strain gauged transducers according to the invention. Secondly, for cars, a determination of skid at one or more wheels is required so that the brake pressure at that wheel (or axle e.g. for a single measurement and control of both front or rear wheels) can be temporarily reduced i.e. until the skidding has ceased. The skidding may currently be determined e.g. in response to the measurement of pulses, as from a rotating toothed wheel. I now propose that the skidding be determined by the strain on the chassis component e.g. by placing a strain gauged transducer between or adjacent brake caliper (usually disc brake caliper) mounting legs, so as to measure the torque transmitted (if any) from the brake disc to the chassis via the brakecaliper.

A strain gauged transducer according to the invention need include a sensor disc only of radius 2mm, so that the bore in the chassis member in which it is to be positioned causes minimum weakening of the member.

**Claims**

1. A strain gauged transducer comprising a base member 26 and at least one strain gauge 28, the base member 26 having a pair of spaced apart surface portions 23, 34 characterised in that the or each strain gauge 28 is arranged to measure or monitor changes of strain between the said surface portions 23, 34.

2. A strain gauged transducer as claimed in Claim 1 characterised in that the base member 26 is in the form of a disc.

3. A strain gauged transducer as claimed in Claim 2, characterised in that the base member 26 is in the form of a section through the center of a sphere.

4. A strain gauged transducer as claimed in Claim 2 or Claim 3 characterised in that it comprises a group of four strain gauges (28).

5. A strain gauged transducer as claimed in any preceding claim and where a plurality of strain gauges (28) is provided, characterised in that the strain gauges are arranged substantially in the same place.

6. A strain gauged transducer as claimed in any preceding claim and where a plurality of strain gauges (28) is provided characterised in that the strain gauges are at right angles to each other.

7. A method of measuring or monitoring the change of strain between two spaced positions comprising locating a strain gauged transducer as claimed in any preceding claim such that it extends between means defining the two positions with each said surface portion 23, 34 in an interference fit with said means as said respective positions, and monotoring the or each strain gauge 28.

8. Apparatus for measuring or montitoring the chain of strain in a workpiece or other member comprising a hollow elongate body 40 into which a strain gauged transducer is located, the body 40 in use being inserted into a hole 44 in the workpiece or other member such that the region of the body adjacent the strain gauged transducer is in operative engagement with the hole 44, characterised in that the transducer is a transducer as claimed in any of claims 1 to 6 and is located such that each of said surface portions 23, 34 is in engagement with an inner surface of the body.

9. Apparatus as claimed in Claim 8, characterised in that the inner surface of the body is of circular cross-section.

10. Apparatus as claimed in claim 8 or 9, characterised in that the body has a screw thread 42 on its outer surface and in use is received by a complementary screw thread provided in the hole 44 in the workpiece or other member.

Fig.1.

Fig.2.

Fig.3.

Fig.4.

*Fig.5.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 175 917 (R. BOSCH GMBH) <br> * claims 1-6 * | 1,2,4,6 ,9 | G 01 L 1/22 <br> G 01 L 5/13 |
| A,D | EP-A-0 129 331 (TRW LTD.) <br> * abstract; figure 1 * | 1 | |

TECHNICAL FIELDS
SEARCHED (Int. Cl.4)

G 01 L 1/22
G 01 L 5/13

The present search report has been drawn up for all claims

| Place of search | Date of completion of the search | Examiner |
|---|---|---|
| BERLIN | 18-01-1988 | KOEHN G |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................
& : member of the same patent family, corresponding
   document

EPO FORM 1503 03.82 (P0401)